# EUROPEAN PATENT APPLICATION

(11) **EP 3 296 844 A1**
(43) Date of publication of application: **21.03.2018**
(21) Application number: 15891863.1
(22) Date of filing: 13.05.2015
(51) Int. Cl.: G06F 3/03, G06F 3/041, G06F 21/31

(54) **TERMINAL DEVICE, ELECTRONIC STAMP, AND PROGRAM**

(71) Applicant: Leonis & Co., Inc., Tokyo 160-0022 (JP); Transcosmos Inc., Tokyo 150-8530 (JP)
(72) Inventor: UENISHI Masutomo, Tokyo 160-0022 (JP); NAKAYAMA Yoshimitsu, Tokyo 150-8530 (JP)
(74) Representative: Müller-Boré & Partner Patentanwälte PartG mbB
(86) International application number: PCT/JP2015/063831
(87) International publication number: WO 2016/181539

(57) **Abstract**

[Problem] To provide a terminal device which is capable of increasing electronic stamp position patterns without reducing the types of terminal devices for which the electronic stamp maybe used. [Solution] This terminal device comprises a multi-touch-format touch panel which is capable of simultaneously detecting contacts or presses at a plurality of positions, and a control unit which carries out a prescribed control on condition that after the contacts or presses have been detected in the touch panel at the plurality of positions which have a prescribed relative position, contacts or presses are detected at a plurality of positions which have a different prescribed relative position.

## Description

### Technical Field

The present invention relates to a terminal device, an electronic stamp and a program, in which a multi-touch adaptive touch panel implemented on the terminal device performs predetermined control on the condition that a plurality of positions detected by the fact that electronic stamps are being pressed down are in a predetermined relative positional relationship.

### Background Art

Recent years have seen the widespread use of terminal devices, in particular, portable terminals, including smartphones, that employ a touch-panel system wherein operation of the terminals and input of information are performed by causing fingers, or the like, to make contact with a screen.

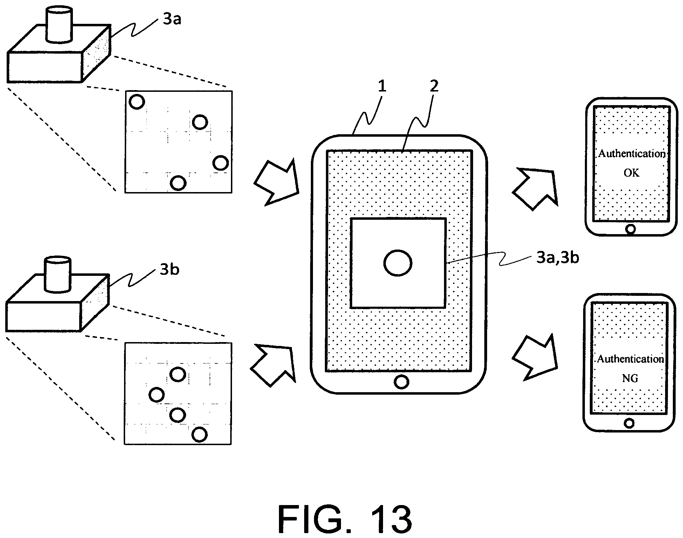

Meanwhile, various systems have been devised by utilizing the feature wherein the input of information is performed by causing fingers to make contact with a touch panel. One example thereof is an electronic stamp system as disclosed in Patent Document 1. The electronic stamp system considers the relative positional relationship of a plurality of conductive members attached on a surface of a nonconductive member as a stamp, and by causing this plurality of conductive members to make contact with a capacitance-type multi-touch adaptive touch panel, a terminal device provided with such touch panel is made to electronically recognize such stamp. In particular, as shown in, for example, Fig. 13, use can be made such that when a stamp 3a in which a plurality of conductive members are arranged in a correct relative positional relationship is made to contact with the multi-touch adaptive touch panel 2 of the terminal device 1, authentication is successful and the terminal device 1 performs predetermined control, and such that when a stamp 3b in which a plurality of conductive members are not arranged in a correct relative positional relationship is made to contact therewith, authentication fails and the terminal device 1 does not perform the predetermined control.

In addition, an example of the applied services using electronic stamps includes an electronic ticket system as disclosed in Patent Document 2. In such system, a terminal device, on which an electronic ticket is displayed by activating a dedicated electronic ticket application, is presented to a staff member at an entrance gate at a venue for concerts or the like, and admission into the venue is allowed by the staff member causing an electronic stamp to make contact therewith so as to cause transition to a "used ticket" display. By means of such system, a time-consuming paper-based ticket collecting can be replaced by the simple work of a staff member causing a stamp to make contact with a touch panel, and thus, the admission procedure can be performed more smoothly.

### Prior Art References

### Patent Documents

Patent Document 1: Japanese Laid-Open Patent Application No. 2012-256246
Patent Document 2: Japanese Laid-Open Patent Application No. 2015-005275

### Summary of the Invention

### Problems to be solved by the Invention

(1) The electronic stamp illustrated as the background art considers the relative positional relationship of the plurality of conductive members which are made to contact with the touch panel as the stamp; however, the area of the surface on which the stamp is provided is subject to restriction by the area of the touch panel onto which such electronic stamp is sealed, and accordingly, the number of conductive members constituting the stamp is also subject to the restriction. In addition, from the viewpoint of securing easy sealing by a person who conducts the sealing, it is necessary to provide some margin to the area of the touch panel, and this also leads to the restriction of the area of the stamp surface.
   For example, when a substantially square-shaped electronic stamp is applied, it is necessary to make the length of the diagonal not exceed the width of a typical smartphone screen (e.g., approximately 30 by 30 mm), taking into consideration the usage of the electronic stamp with some rotation. In addition, the conductive members which are made to contact with the touch panel will not be recognized as a finger unless they have a certain area, while they will be misdetected as one finger when the neighboring conductive members are too close to each other. For this reason, it is practical to make the arrangement density of the conductive members in such substantially square-shaped electronic stamp approximately 5 by 5. There are more than 30,000,000 patterns in total for arranging 2 to 24 conductive members in 5 x 5 = 25 positions; however, in reality, due to the need to exclude the arrangement patterns where conductive members come close to each other and the rotationally symmetrical arrangement patterns for reliably preventing misdetection, the number of arrangement patterns is limited to a few hundred for arranging 3 to 5 conductive members. Moreover, given the variation in detection accuracy of the touch panels on a terminal device type by terminal device type basis, the number of arrangement patterns is, in reality, further limited if an attempt is made to support most of the commercially-available device types.
   For example, in the case of realizing services of offering benefits by coming to a plurality of different stores among large-scale chain stores, or the like, by making use of electronic stamps, the number of arrangement patterns may become insufficient when the number of stores increases due to the need of making the electronic stamps different on a store by store basis. In addition, in the case of stamp-rallies, the number of arrangement patterns may become insufficient when the number of checkpoints is large.
   Accordingly, a first object of the present invention is to provide a terminal device, an electronic stamp and a program, in which the number of arrangement patterns of the electronic stamp can be increased without decreasing the number of terminal device types that can be applied with the electronic stamp.
(2) The electronic stamp illustrated as the background art simply causes a plurality of conductive members to make contact with a touch panel, and thus, there is a risk of the sealing being successful by making several attempts by changing the arrangement of fingers using a plurality of fingers. Such fraudulence does not become a serious issue in the form of utilization wherein transactions are simply verified by sealing the electronic tickets, or the like. However, it would become a serious issue in the form of utilization wherein benefits are offered by the sealing of stamp cards, or the like.

Accordingly, a second object of the present invention is to provide a terminal device, an electronic stamp and a program, in which fraudulent sealing is difficult.

### Means for solving the Problems

(1) A terminal device according to the present invention at least includes: a multi-touch type touch panel that is capable of simultaneously detecting touches or pressing-downs at a plurality of positions; and a control part that performs predetermined control on the condition that, subsequent to the detection of touches or pressing-downs at the plurality of positions having a predetermined relative positional relationship on the touch panel, touches or pressing-downs are detected at a plurality of positions having another predetermined relative positional relationship. Unlike the conventional touch panel where authentication for execution of control is performed solely based on the detection of touches or pressing-downs at a plurality of positions having the predetermined relative positional relationship; according to the present invention, authentication for execution of control is performed on the condition that, subsequent to the above-described detection, touches or pressing-downs at a plurality of positions having another predetermined relative positional relationship are detected. By performing two-step authentication in this manner, even if a single step only has 50 arrangement patterns, 50 x 50 = 2,500 arrangement patterns can be prepared for an electronic stamp by having two steps. Accordingly, the number of arrangement patterns can be increased dramatically without reducing the number of available terminal device types. Therefore, even when providing services of offering benefits by coming to a plurality of different stores among large-scale chain stores, electronic stamps having arrangement patterns different on a store by store basis can still be provided, and it is also possible to practically eliminate the upper limit in the number of checkpoints in stamp rallies.
(2) For the two-step authentication in the terminal device according to the present invention, a plurality of absolute positions on the touch panel, which are touched or pressed down in the predetermined relative positional relationship, and a plurality of absolute positions on the touch panel, which are touched or pressed down in another predetermined relative positional relationship, may share at least one common position, and this may be used as a condition for the authentication. By having such authentication condition, fraudulent sealing using fingers can be prevented.
(3) An electronic stamp according to the present invention includes a plurality of members arranged in a predetermined relative positional relationship, wherein a terminal device is caused to detect touches or pressing-downs at a plurality of positions having the predetermined relative positional relationship by a touch panel of the terminal device being touched or pressed down with the plurality of members, and wherein the electronic stamp is configured such that an arrangement of the plurality of members arranged in the predetermined relative positional relationship can be automatically or semi-automatically changed to an arrangement in another predetermined relative positional relationship.
(4) In the electronic stamp according to (3), to automatically change the arrangement of the members, there may be provided, for example, an arrangement control part that detects the fact that the plurality of members arranged in the predetermined relative positional relationship have made contact with the touch panel or have pressed down the touch panel and that, subsequent to such detection, changes the arrangement of the plurality of members arranged in the predetermined relative positional relationship to the arrangement in the another predetermined relative positional relationship. Accordingly, subsequent to the plurality of members arranged in the predetermined relative positional relationship making contact with the touch panel, the arrangement of the plurality of members arranged in the predetermined relative positional relationship can be automatically and promptly changed to the arrangement in the another predetermined relative positional relationship. Furthermore, when the plurality of absolute positions on the touch panel, which are touched or pressed down in the predetermined relative positional relationship, and the plurality of absolute positions on the touch panel, which are touched or pressed down in another predetermined relative positional relationship, share at least one common position, and when this is used as a condition for the authentication at the terminal device for the purpose of preventing fraudulent sealing, the arrangement control part may be configured so as to control the arrangement of the plurality of members in order to meet the above-described condition. Accordingly, the authentication condition can be met by continuing the sealing of the electronic stamp to the touch panel for a predetermined time.
(5) In the electronic stamp according to (3), the following configuration may be employed in order to semi-automatically change the arrangement of the members. The electronic stamp according to the present invention includes a pressing-down part, a plurality of transmission parts and a moving part. The pressing-down part includes, in a concave part that is formed facing a surface with which a first stamp and a second stamp make contact or against which a first stamp and a second stamp are pressed down, a first slope and the second stamp made up of a plurality of members arranged in the another predetermined relative positional relationship. The transmission part includes a second slope and a third slope that are inclined so as to broaden in opposite directions with respect to each other while sandwiching therebetween a surface that is perpendicular to the surface, with which the first stamp and the second stamp make contact or against which the first stamp and the second stamp are pressed down. The moving part is a plate-like part that is formed with the first stamp on one surface thereof, the first stamp being made up of a plurality of members arranged in the predetermined relative positional relationship and the moving part not preventing the lowering of the second stamp. As an example of the configuration that does not prevent the lowering of the second stamp, a plurality of holes are provided on the moving part corresponding to the arrangement of the plurality of members of the second stamp, and such members of the second stamp are made to pass through the holes 232. The concave part of the pressing-down part surrounds the plurality of transmission parts such that the first slope and the second slope make contact with each other on a surface-to-surface basis, and the moving part is mounted on the third slopes of the plurality of transmission parts that surround the moving part such that a surface that is formed with the first stamp faces the surface with which the first stamp makes contact or against which the first stamp is pressed down.
   Based on the above-described configuration, in the state where the pressing-down part is not pressed down, the first stamp is exposed to be ready for making contact with or for being pressed down against the touch panel first stamp. On the other hand, when the pressing-down part is pressed down toward the surface with which the stamp makes contact or against which the stamp is pressed down, the second stamp lowers down and the plurality of transmission parts are pressed and moved by the first slope sliding along the second slope, thus, the area of a part surrounded by the third slopes of the plurality of transmission parts decreases. As a consequence of the decrease in area, the moving part provided with the first stamp rises to the upper part with a larger area by sliding along the third slopes, and thus, the lowered second stamp is exposed to be ready for making contact with or for being pressed down against the touch panel in place of the first stamp. Accordingly, subsequent to the plurality of members arranged in the predetermined relative positional relationship making contact with the touch panel, the arrangement of the plurality of members arranged in the predetermined relative positional relationship can be changed to an arrangement of another predetermined relative positional relationship in a semi-automatic and prompt manner by pressing down the pressing-down part.
(6) When the plurality of absolute positions on the touch panel, which are touched or pressed down in the predetermined relative positional relationship, and the plurality of absolute positions on the touch panel, which are touched or pressed down in another predetermined relative positional relationship, share at least one common position, and when this is used as a condition for the authentication at the terminal device for the purpose of preventing fraudulent sealing, examples of the method of semi-automatically changing the arrangement of the members include, regarding the configuration of (5), (I) a method of providing a third stamp, which is made up of one or more members, on the bottom face of the pressing-down part, (II) a method of using part or all of the bottom face of at least one transmission part as the third stamp, or the like. By employing these methods, in the state where the pressing-down part is not pressed down, the first stamp and the third stamp are exposed to be ready for making contact with or for being pressed down against the touch panel, whereas in the state where the pressing-down part is pressed down toward the surface, with which the stamps make contact or against which the stamps are pressed down, the second stamp and the third stamp are exposed to be ready for making contact with or for being pressed down against the touch panel. In other words, the third stamp is exposed to be ready for making contact with or for being pressed down against the touch panel both prior to and subsequent to the pressing down of the pressing-down part. Accordingly, when the arrangement in which the first stamp and the third stamp are combined is considered as the predetermined relative positional relationship and the arrangement in which the second stamp and the third stamp are combined is considered as the another predetermined relative positional relationship, the plurality of absolute positions on the touch panel, which are touched or pressed down via sealing in the predetermined relative positional relationship, and the plurality of absolute positions on the touch panel, which are touched or pressed down in the another predetermined relative positional relationship, share at least one common position. Accordingly, by pressing down the pressing-down part, subsequent to the plurality of members arranged in the predetermined relative positional relationship making contact with the touch panel, the arrangement of the plurality of members arranged in the predetermined relative positional relationship can be changed semi-automatically and promptly to the arrangement in the another predetermined relative positional relationship in such a manner that the plurality of absolute positions on the touch panel, which are touched or pressed down in the predetermined relative positional relationship, and the plurality of absolute positions on the touch panel, which are touched or pressed down in the another predetermined relative positional relationship, share at least one common position.

### Brief Description of the Drawings

Fig. 1 is a diagram illustrating a configuration of a terminal device according to the present invention.
Fig. 2 contains diagrams illustrating examples of the predetermined relative positional relationships.
Fig. 3 contains diagrams illustrating an example of an electronic stamp in which the arrangement of members can be changed automatically.
Fig. 4 contains diagrams illustrating examples of the appearance of an electronic stamp in which the arrangement of members can be changed semi-automatically.
Fig. 5 contains diagrams illustrating an example of a pressing-down part.
Fig. 6 contains diagrams illustrating an example of a transmission part.
Fig. 7 contains diagrams illustrating an example of a moving part.
Fig. 8 contains diagrams illustrating an electronic stamp assembled using the respective parts illustrated in Figs. 5 to 7.
Fig. 9 contains diagrams illustrating the arrangement relationship between the transmission part and the moving part at the time of assembly.
Fig. 10 contains diagrams describing an example in which a third stamp is provided to the electronic stamp.
Fig. 11 contains diagrams describing a method of absorbing the change in relative positions between the pressing-down part and the third stamp.
Fig. 12 contains other diagrams describing an example in which a third stamp is provided to the electronic stamp.
Fig. 13 is a diagram describing an electronic stamp system.

### Description of Embodiments

### [Terminal device]

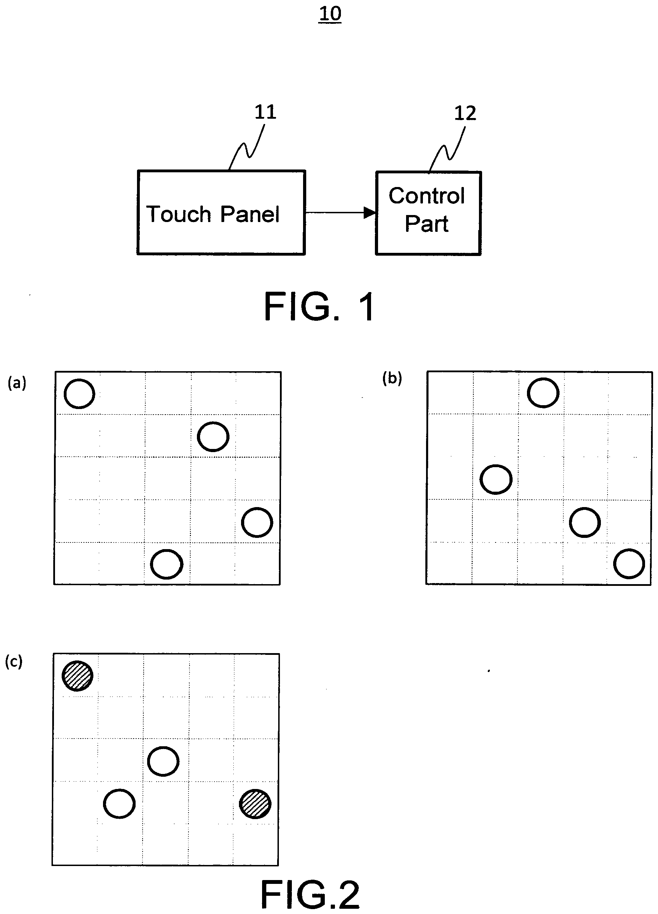

Fig. 1 is a diagram illustrating a configuration of a terminal device 10 according to the present invention. The terminal device 10 includes at least a touch panel 11 and a control part 12, and it also incorporates various other functions according to the applications of the terminal device 10.

The touch panel 11 is a multi-touch type touch panel that is capable of simultaneously detecting touches or pressing-downs at a plurality of positions. Detection methods of the touch panel include a method in which detection is made by causing a statically conductive object to make contact therewith (e.g., a capacitance method), a method in which detection is made by the touch panel being pressed down (e.g., a resistive film method), and the like; however, any method is sufficient as long as it is capable of simultaneously detecting touches or pressing-downs at a plurality of positions. The control part 12 performs predetermined control on the condition that, subsequent to the detection of touches or pressing-downs at a plurality of positions having a predetermined relative positional relationship (e.g., Fig. 2(a)) on the touch panel 11, touches or pressing-downs at a plurality of positions having another predetermined relative positional relationship (e.g., Fig. 2(b)) are detected. The significance of relatively defining the positional relationships is that, because sealing of an electronic stamp onto the touch panel is conducted by a human being and thus, the sealing orientation is not always the same, the relative definition of the positional relationships would allow authentication without relying on the sealing orientation. As long as the predetermined relative positional relationship and the another relative positional relationship have arrangements which are different from each other, the specific arrangement of each positional relationship is arbitrary. It should be noted that the content of the relative positional relationship and the another relative positional relationship may be held by the control part 12 itself, or a storage means of the terminal device 10 may hold the same and it may be read out therefrom. Moreover, other devices such as a server, or the like, via a network may hold the same and it may be read out therefrom. From the viewpoint of preventing fraudulent input, it may be advisable to limit the time until when the another predetermined relative positional relationship is detected subsequent to touches or pressing-downs at a plurality of positions having the predetermined relative positional relationship being detected. In this case, if a longer time is set, the risk of fraudulent input increases and thus, it is preferable that the time is set to be as short as possible. The content of the predetermined control in the case of successful authentication is also arbitrary and examples of such predetermined control include changing the screen display, receiving/sending predetermined information, or the like.

Unlike the conventional touch panel where authentication for execution of control is performed solely based on the detection of touches or pressing-downs at a plurality of positions having the predetermined relative positional relationship, according to the present invention, authentication for execution of control is performed on the condition that, subsequent to the above-described detection, touches or pressing-downs at a plurality of positions having another predetermined relative positional relationship are detected. By performing two-step authentication in this manner, even if a single step only has 50 arrangement patterns, 50 x 50 = 2,500 arrangement patterns can be prepared for an electronic stamp by having two steps. Accordingly, the number of arrangement patterns can be increased dramatically without reducing the number of available terminal device types. Therefore, even when providing services of offering benefits by coming to a plurality of different stores among large-scale chain stores, electronic stamps having arrangement patterns different on a store by store basis can still be provided, and it is also possible to practically eliminate the upper limit in the number of checkpoints in stamp rallies.

### [Terminal device (modification)]

For the two-step authentication in the terminal device 10 according to the present invention, a plurality of absolute positions on the touch panel 11, which are touched or pressed down in the predetermined relative positional relationship, and a plurality of absolute positions on the touch panel 11, which are touched or pressed down in another predetermined relative positional relationship, may share at least one common position, and this may be used as a condition for the authentication. For example, Fig. 2(c) shows an example where, with respect to the predetermined relative positional relationship shown in Fig. 2(a), another predetermined relative positional relationship shares two common positions (shaded positions) therewith.

When an attempt is made to make the predetermined relative positional relationship and the another predetermined relative positional relationship by changing the finger arrangement using a plurality of fingers, even with knowledge of the correct arrangement, it is not easy to change the finger arrangement to the another predetermined relative positional relationship while leaving some fingers in contact with the touch panel. In addition, when all fingers are released at once from the touch panel in order to change the finger arrangement, it is also not easy to place the fingers again on the exact same positions as those before the release. Therefore, by using the above-described authentication condition, fraudulent sealing using fingers can be prevented.

### [Electronic stamp]

An electronic stamp according to the present invention includes a plurality of members arranged in predetermined relative positional relationship, and by touching or pressing down the touch panel of the terminal device with such plurality of members, the terminal device is allowed to detect the touches or pressing-downs at a plurality of positions having the predetermined relative positional relationship. The electronic stamp is configured such that the arrangement of the plurality of members arranged in the predetermined relative positional relationship is automatically or semi-automatically changeable to an arrangement of another predetermined relative positional relationship.

General examples of the method of changing the arrangement of the plurality of members from the predetermined relative positional relationship to the another predetermined relative positional relationship include, among others: a method of preparing two electronic stamps having different arrangements for the plurality of members; or a method of manually changing the arrangements of the members by making the members configuring the electronic stamp removable within one single electronic stamp. However, considering the fact that the arrangement of members needs to be changed within a short period of time from the viewpoint of preventing fraud, it is impractical to change the electronic stamp itself or to manually change the arrangement of members. Therefore, it is desirable for an electronic stamp to have a configuration in which the arrangement of the plurality of members can be changed automatically or semi-automatically. The following provides a specific description regarding the configuration in which the arrangement of the plurality of members can be changed automatically or semi-automatically.

### [Electronic stamp (automatic arrangement changes)]

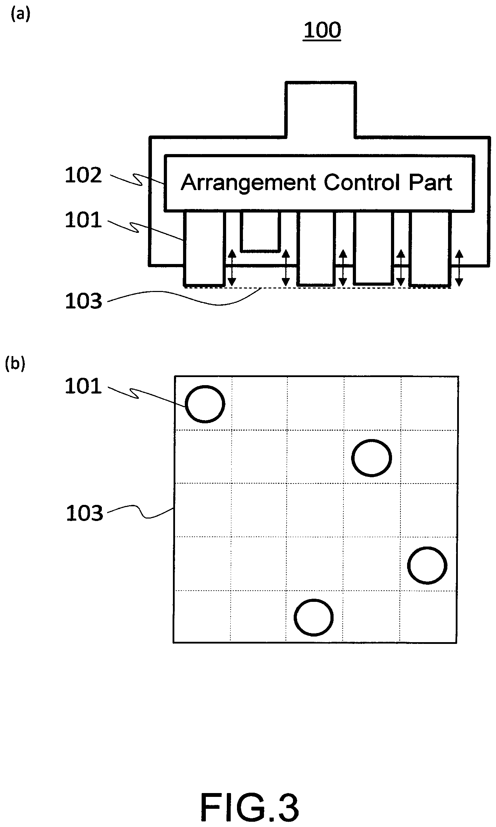

Fig. 3(a) is a cross-section illustrating an example of an electronic stamp 100. The electronic stamp 100 includes a plurality of members 101 arranged in the predetermined relative positional relationship and an arrangement control part 102. Fig. 3(b) is a diagram illustrating an example arrangement of the plurality of members 101 in the bottom of the electronic stamp 100, namely, in a surface 103 configuring the stamp. The material of the plurality of members 101 needs to be statically conductive if the detection method of the touch panel 11, to which the electronic stamp 100 is applied, is by means of detecting touches/contacts of a statically conductive object; however, any material may be used if such detection method is by means of detecting pressing-downs of the touch panel. In addition, any shape can be used for the plurality of members 101 in the surface 103 configuring the stamp, and the example in Fig. 3(b) employs a circular shape.

The electronic stamp 100 causes the terminal device 10 to detect touches or pressing-downs at a plurality of positions having the predetermined relative positional relationship by the touch panel 11 of the terminal device 10 being touched or pressed down with the plurality of members of the electronic stamp 100. The electronic stamp 100 is configured such that the arrangement of the plurality of members 101 arranged in the predetermined relative positional relationship is automatically changeable to an arrangement of another predetermined relative positional relationship. More particularly, the arrangement control part 102 detects, via the plurality of members 101, the fact that the plurality of members 101 arranged in the predetermined relative positional relationship have made contact with the touch panel 11 or have pressed down the touch panel 11, and, subsequent to the detection, the arrangement control part 102 changes the arrangement of the plurality of members 101 arranged in the predetermined relative positional relationship to an arrangement in the another predetermined relative positional relationship. For that reason, the predetermined relative positional relationship and the another predetermined relative positional relationship need to be registered in advance with the arrangement control part 102. The method of registering the relative positional relationships is arbitrary and examples thereof include, among others, the electronic stamp 100 itself incorporating a registering means, or externally obtaining the same via wireless communication. The method of changing the arrangement of the plurality of members 101 is also arbitrary. An example thereof includes, as shown in Fig. 3(a), a method where the plurality of members 101 make vertical movements in a direction vertical to the stamp surface 103. The time period from the detection of touches or pressing-downs at a plurality of positions having the predetermined relative positional relationship to the change of the arrangement to the another predetermined relative positional relationship is also arbitrary; however, when a time limit is set at the terminal device 10, to which the electronic stamp is applied, such time period may be set within the time limit.

In this manner, subsequent to the plurality of members 101 arranged in the predetermined relative positional relationship making contact with the touch panel 11, the arrangement of the plurality of members 101 arranged in the predetermined relative positional relationship can be changed automatically and promptly to the arrangement in the another predetermined relative positional relationship. In addition, when the plurality of absolute positions on the touch panel 11, which are touched or pressed down in the predetermined relative positional relationship, and the plurality of absolute positions on the touch panel 11, which are touched or pressed down in another predetermined relative positional relationship, share at least one common position, and when this is used as a condition for the authentication at the terminal device 10 for the purpose of preventing fraudulent sealing, the arrangement control part 102 may be configured so as to control the arrangement of the plurality of members 101 in order to meet the above-described condition. Accordingly, the authentication condition can be met by continuing the sealing of the electronic stamp 100 to the touch panel 11 for a predetermined time.

### [Electronic stamp (semi-automatic arrangement changes)]

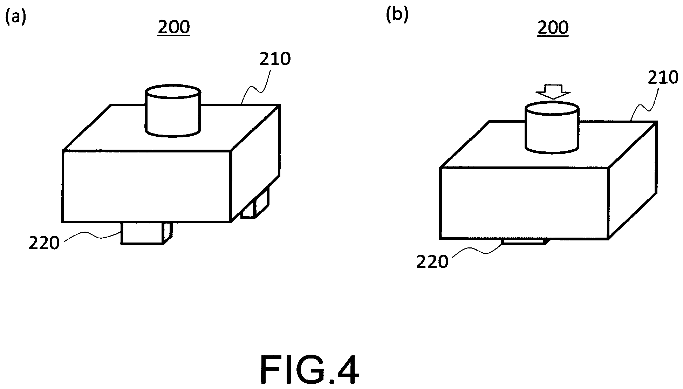

Fig. 4 is a perspective view illustrating an example of an electronic stamp 200. More specifically, Fig. 4(a) shows a normal state and Fig. 4(b) shows a pressed-down state. The electronic stamp 200 includes a pressing-down part 210, a plurality of transmission parts 220 and a moving part 230. The number of the transmission parts 220 may be determined arbitrarily in view of the sealing stability of a first stamp 231, the moving stability and slidability of the moving part 230, or the like.

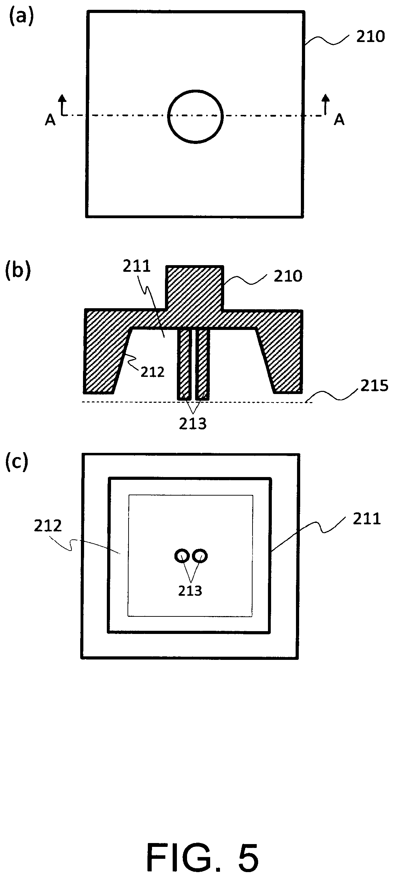

The pressing-down part 210 includes a first slope 212 and a second stamp 213 made up of the plurality of members arranged in the another predetermined relative positional relationship, in a concave part 211 that is formed facing a surface 215 at with which the first stamp 231 and the second stamp 213 are caused to make contact or to be pressed down (hereinafter referred to as the "surface 215"). Fig. 5 shows a configuration example of the pressing-down part 210. More specifically, Fig. 5(a) shows a plan view of the pressing-down part 210, Fig. 5(b) shows a cross-sectional view along line A-A and Fig. 5(c) shows a bottom view. Here, the pressing-down part 210 is shown to have a square planar shape in Fig. 5; however, any shape may be employed. The opening of the concave part 211 is also shown to have a square shape in Fig. 5(c); however, any shape, including a circle or the like, may be employed as long as the sliding of a second slope 221 of the transmission part 220 along the first slope 212 is not hindered. Moreover, the material of the plurality of members configuring the second stamp 213 needs to be statically conductive if the detection method of the touch panel 11, to which the electronic stamp 200 is applied, is by means of detecting touches/contacts of a statically conductive object; however, any material may be used if such detection method is by means of detecting pressing-downs of the touch panel. The number and arrangement of the members configuring the second stamp 213 are arbitrary and the shape of the plurality of members in the surface facing the surface 215 of the second stamp 213 is also arbitrary. Figs. 5(b) and 5(c) show two members and the shape of the members is circular.

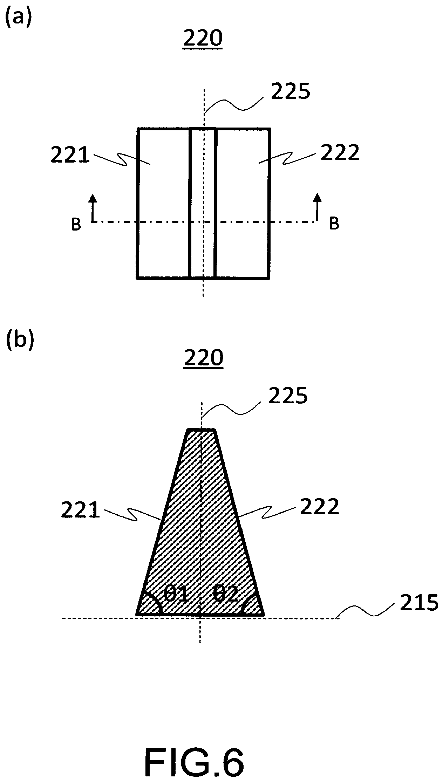

The transmission part 220 includes a second slope 221 and a third slope 222 that are inclined so as to broaden in opposite directions with respect to each other while sandwiching therebetween a surface 225 that is perpendicular to the surface 215. Fig. 6 shows a configuration example of the transmission part 220. More specifically, Fig. 6(a) shows a plan view of the transmission part 220 and Fig. 6(b) shows a cross-sectional view along line B-B. Here, the shape of the second slope 221 and the third slope 222 are shown as planar in Fig. 6; however, if the concave part 211 of the pressing-down part 210 is circular, the first slope 212 has a curved surface. In this case, from the viewpoint of slidability, the second slope 221 may also have a curved surface. In addition, when the moving part 230, which slides along the third slope 222, has a circular planer shape, the third slope 222 may also have a curved surface from the viewpoint of slidability. The angle θ1 between the first slope 221 and the surface 215 and the angle θ2 between the second slope 222 and the surface 215 are both arbitrary; however, the rising distance of the moving part 230 with respect to the distance by which the pressing-down part 210 is pressed down can be controlled by making the angle θ1 and the angle θ2 different from each other. For example, the larger the angle θ2 is than the angle θ1, the larger the rising distance of the moving part 230 can be as compared to the distance by which the pressing-down part 210 is pressed down. However, on the other side, the smaller the angle θ1 is, the larger the power needed for pressing down, and thus, a balance should be sought in view of practicality.

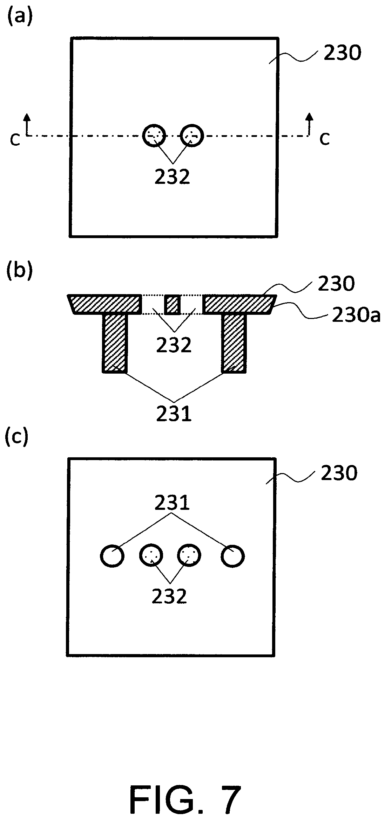

The moving part 230 is a plate-like part that is formed with the first stamp 231 on one surface thereof, which is made up of a plurality of members arranged in the predetermined relative positional relationship. According to the present invention, the second stamp 213 is provided on the pressing-down part 210 that is provided at the uppermost part of the electronic stamp 200. The sealing by the second stamp 213 is achieved by lowering the pressing-down part 210 and thus, the moving part 230 that is provided at the lower part needs to be shaped so as not to prevent the lowering of the second stamp 213. Fig. 7 shows a configuration example of the moving part 230. More specifically, Fig. 7(a) shows a plan view of the transmission part 220 and Fig. 7(b) shows a cross-sectional view along line C-C. Here, the moving part 230 is shown to have a square shape in Figs. 7(a) and 7(c); however, any shape, including a circle or the like, may be employed as long as the sliding on the third slope 222 is not hindered. In Fig. 7(b), s 230a are inclined in terms of enhancing the contactability with the third slopes 222. The angle of inclination may be varied as appropriate for controlling the slidability. As an example of the configuration that does not prevent the lowering of the second stamp 213, a plurality of holes 232 are formed on the moving part 230 corresponding to the arrangement of the plurality of (here, two) members of the second stamp 213 as shown in Fig. 7, and such members of the second stamp 213 are made to pass through the holes 232. Although not shown in the figure, the moving part 230 may be formed with a cutout.

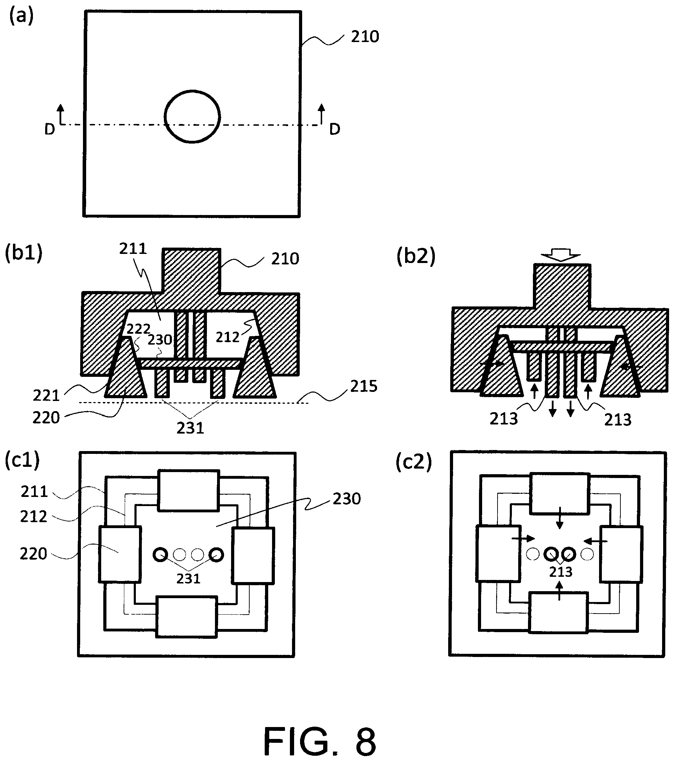

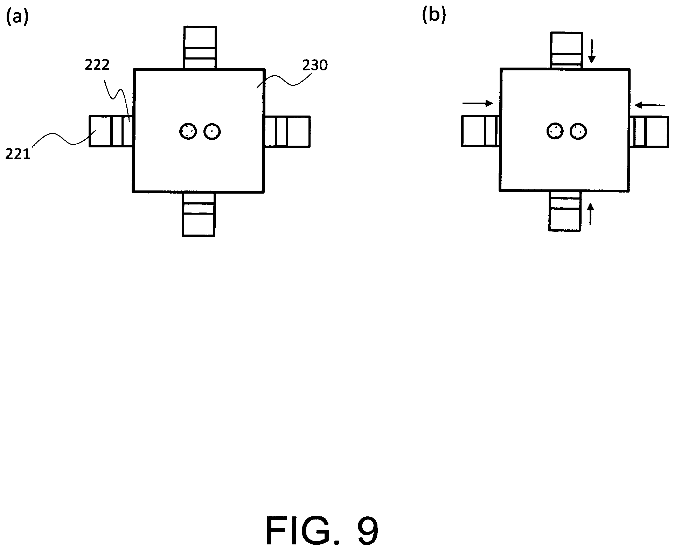

Fig. 8 shows an example of the electronic stamp 200 configured by combining the pressing-down part 210, the plurality of transmission parts 220 and the moving part 230. Fig. 8 illustrates the case in which the pressing-down part 210, the transmission part 220 and the moving part 230 have the shapes shown in Figs. 5 to 7 and in which there are four transmission parts 220. More specifically, Fig. 8(a) shows a plan view, Fig. 8(b1) shows a cross-sectional view along line D-D and Fig. 8(c1) shows a bottom view. Fig. 9(a) shows a plan view where the pressing-down part 210 is removed. The concave part 211 of the pressing-down part 210 surrounds the four transmission parts 220 such that the first slope 212 and the second slope 221 make contact with each other on a surface-to-surface basis, and the moving part 230 is mounted on the third slopes 222 of the four transmission parts 220 that surround the moving part 230 such that the surface that is formed with the first stamp 231 faces the surface 215. It should be noted that the pressing-down part 210 and the transmission parts 220 may be coupled to each other by means of an elastic body, such as a spring, or the like, for securement of integrity and for restoration of the pressing-down part 210 to the state prior to the pressing down from the state after the pressing down (not shown). The moving part 230 may also be coupled to the pressing-down part 210 and/or the transmission parts 220 as appropriate. When the detection method is employed by which the positions are detected by the touch panel 11 by causing the statically conductive object to make contact therewith, and when the transmission parts 220 are configured such that both the first stamp 231 and the second stamp 213 make contact with the surface 215, the material of the transmission parts 220 needs to be non-statically conductive. On the other hand, when the detection method is employed by which the positions are detected by the touch panel 11 being pressed down, the shape, or the like, of the respective parts needs to be designed such that the first stamp 231 and the second stamp 213 project more than the transmission parts 220 in order to prevent the transmission parts 220 from pressing down the touch panel 11 at the time of sealing the electronic stamp 200. However, if the bottom faces of the transmission parts 220 are used as part of the first stamp 231 and the second stamp 213, the transmission parts 220 can be configured so as to make contact with the touch panel 11 along with both the first stamp 231 and the second stamp 213.

Based on the configurations as described above, when the pressing-down part 210 is not pressed down, the first stamp 231 is exposed to be ready for making contact with or for being pressed down against the touch panel 11 as shown in Fig. 8(b1). On the other hand, when the pressing-down part 210 is pressed down toward the surface 215, the second stamp 213 lowers down and the four transmission parts 220 are pressed and move toward the central axis of the concave part 211 by the first slopes 212 sliding along the second slopes 221 as shown in Fig. 8(b2), and thus, the area of the part surrounded by the third slopes 222 of the four transmission parts 220 decreases. As a consequence of the decrease in area, the moving part 230 provided with the first stamp 231 rises to the upper part with a larger area by sliding along the third slopes 222, and thus, the lowered second stamp 213 is exposed to be ready for making contact with or for being pressed down against the touch panel 11 in place of the first stamp 231. Accordingly, subsequent to the plurality of members arranged in the predetermined relative positional relationship making contact with the touch panel 11, the arrangement of the plurality of members arranged in the predetermined relative positional relationship can be changed to an arrangement of another predetermined relative positional relationship in a semi-automatic and prompt manner by pressing down the pressing-down part 210.

### [Electronic stamp (modification of semi-automatic arrangement changes)]

When the plurality of absolute positions on the touch panel 11, which are touched or pressed down in the predetermined relative positional relationship, and the plurality of absolute positions on the touch panel 11, which are touched or pressed down in another predetermined relative positional relationship, share at least one common position, and when this is used as a condition for the authentication at the terminal device 10 for the purpose of preventing fraudulent sealing, examples of the method of semi-automatically changing the arrangement of the members include, regarding the electronic stamp 200 shown in Fig. 8 which enables semi-automatic arrangement change, (I) a method of providing a third stamp, which is made up of one or more members, on the bottom face of the pressing-down part 210, (II) a method of using part or all of the bottom face of at least one transmission part 220 as a third stamp, or the like.

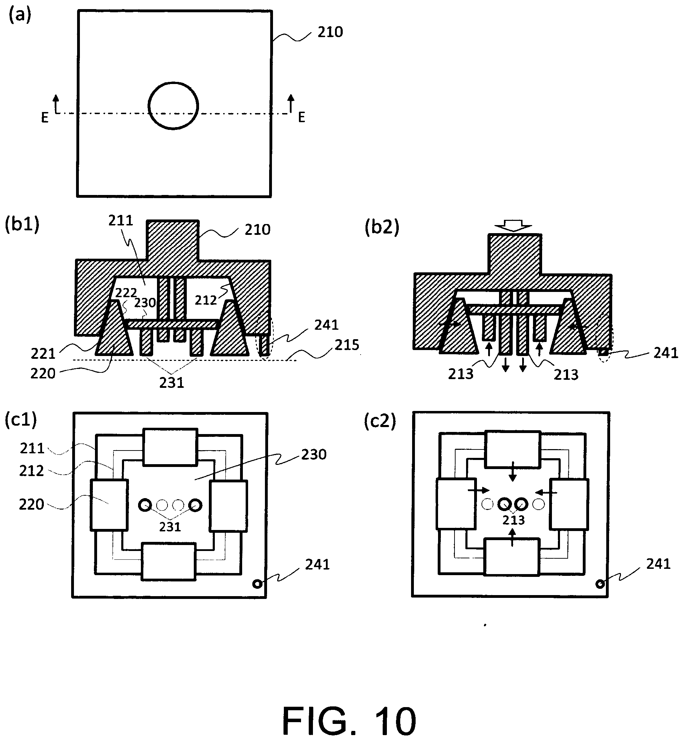

Fig. 10 is a diagram describing the electronic stamp 201, which is a modification of the electronic stamp 200 according to the method (I). More specifically, Fig. 10(a) shows a plan view, Fig. 10(b1) shows a cross-sectional view along line E-E and Fig. 10(c1) shows a bottom view. In this configuration, the third stamp 241 made up of one or more members is provided on the bottom face of the pressing-down part 210. The number of members to be provided and the positions of the members to be provided are arbitrary. The shape of the surfaces of the respective members facing the surface 215 is also arbitrary and the example shown in Fig. 10 is circular. The material of the respective members configuring the third stamp 241 needs to be statically conductive if the detection method of the touch panel 11, to which the electronic stamp 201 is applied, is by means of detecting touches/contacts of a statically conductive object; however, any material may be used if such detection method is by means of detecting pressing-downs of the touch panel.

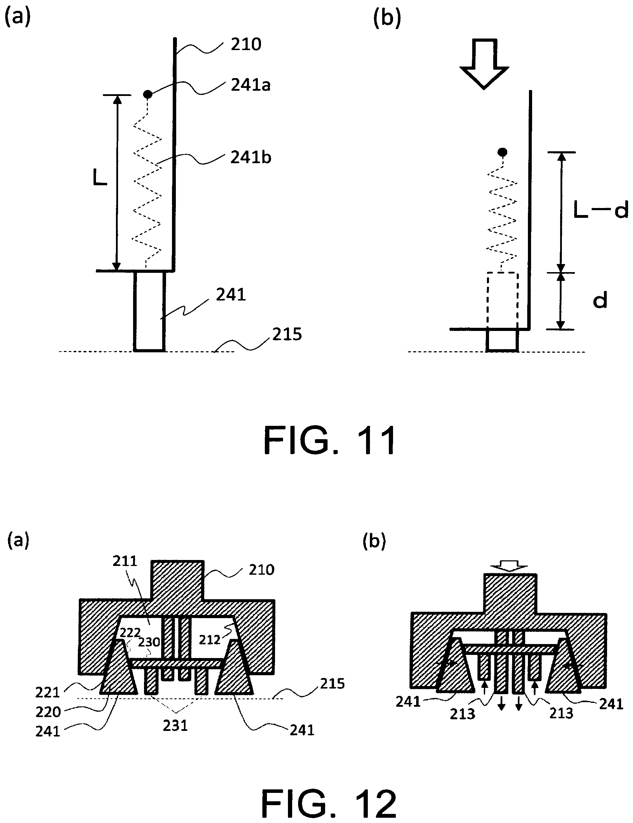

The third stamp 241 usually is exposed in the same plane as the first stamp 231 from the bottom face of the pressing-down part 210, and the third stamp 241 is configured such that it is exposed in the same plane as the second stamp 213 from the bottom face of the pressing-down part 210, even after the pressing-down part 210 is pressed down. In other words, the third stamp is exposed to be ready for making contact with or for being pressed down against the touch panel both prior to and subsequent to the pressing down of the pressing-down part. The change in relative positions between the pressing-down part 210 and the third stamp 241 due to the pressing-down of the pressing-down part 210 is absorbed, for example, by fixing the respective members of the third stamp 241 to the pressing-down part 210 via an elastic body, such as a spring, or the like. More specifically, as shown in Fig. 11(a), a spring fixing part 241a provided in the pressing-down part 210 and a member of the third stamp 241 are connected to each other via a spring 241b having length L, and thus, even when the pressing-down part 210 is pressed down by length d, as shown in Fig. 11(b), the spring 241b decreases by length d and the member of the third stamp enters the pressing-down part 210 by length d to cover the decreased part. In this way, the change in the relative positions between the pressing-down part 210 and the third stamp 241 due to the pressing-down of the pressing-down part 210 is absorbed, and thus, the exposure state of the third stamp 241 can be maintained.

Fig. 12 is a diagram describing the electronic stamp 202, which is a modification of the electronic stamp 200 according to the method (II). In this configuration, all or part of the bottom face of at least one transmission part 220 is used as the third stamp 241.

Fig. 12 shows a cross-sectional view describing an example of the electronic stamp 202 that uses all of the bottom face of at least one transmission part 220 as the third stamp 241. More specifically, Fig. 12(a) shows a cross-sectional view prior to the pressing-down of the pressing-down part 210 and Fig. 12(b) shows a cross-sectional view subsequent to the pressing-down of the pressing-down part 210. When making use of the bottom face of at least one transmission part 220 as the third stamp 241, it is necessary that the electronic stamp 202 is configured, at the time of sealing with the electronic stamp 202, such that both the transmission part 220 and the first stamp 231 are contactable to the surface 215 prior to the pressing-down of the pressing-down part 210 and such that both the transmission part 220 and the second stamp 213 are contactable to the surface 215 subsequent to the pressing-down of the pressing-down part 210. In other words, it is necessary to design the shapes, or the like, of the respective parts such that the surfaces of the transmission part 220 and the first stamp 231, which are facing the surface 215, are exposed in the same plane prior to the pressing-down of the pressing-down part 210 and such that the surfaces of the transmission part 220 and the second stamp 213, which are facing the surface 215, are exposed in the same plane subsequent to the pressing-down of the pressing-down part 210. It should be noted that, since the transmission part 220 is to be recognized as the third stamp 241 by the touch panel 11, when the detection method of the touch panel 11, to which the electronic stamp 202 is applied, is by means of detecting touches/contacts of a statically conductive object, the material of the bottom face of the transmission part 220, i.e. the third stamp 241 needs to be statically conductive.

Any number out of the plurality of transmission parts 220 may be used as the third stamp. When the detection method of the touch panel 11, to which the electronic stamp 202 is applied, is by means of detecting touches/contacts of a statically conductive object, it may be possible to use only part of, instead of all of, the bottom surface of the transmission part 220 as the third stamp by making the material of such part of the bottom face of the transmission part 220 statically conductive.

As described above, by employing a method such as the method (I) or (II), in the state where the pressing-down part 210 is not pressed down, the first stamp 231 and the third stamp 241 are exposed to be ready for making contact with or for being pressed down against the touch panel 11, whereas in the state where the pressing-down part is pressed down toward the surface 215, the second stamp 213 and the third stamp 241 are exposed to be ready for making contact with or for being pressed down against the touch panel 11. In other words, the third stamp 241 is exposed to be ready for making contact with or for being pressed down against the touch panel 11 both prior to and subsequent to the pressing down of the pressing-down part 210. Accordingly, when the arrangement in which the first stamp 231 and the third stamp 213 are combined is considered as the predetermined relative positional relationship and the arrangement in which the second stamp 213 and the third stamp 241 are combined is considered as the another predetermined relative positional relationship, the plurality of absolute positions on the touch panel 11, which are touched or pressed down via sealing in the predetermined relative positional relationship, and the plurality of absolute positions on the touch panel 11, which are touched or pressed down in the another predetermined relative positional relationship, share at least one common position. Accordingly, by pressing down the pressing-down part 210 subsequent to the plurality of members arranged in the predetermined relative positional relationship making contact with the touch panel 11, the arrangement of the plurality of members arranged in the predetermined relative positional relationship can be changed semi-automatically and promptly to the arrangement in the another predetermined relative positional relationship in such a manner that the plurality of absolute positions on the touch panel 11, which are touched or pressed down in the predetermined relative positional relationship, and the plurality of absolute positions on the touch panel 11, which are touched or pressed down in the another predetermined relative positional relationship, share at least one common position.

Various functions and processes in the terminal device and the electronic stamp according to the present invention may be combined or divided as appropriate. Moreover, modifications are possible accordingly within the scope of the technical ideas expressed in the present invention, and it is obvious from the descriptions in the claims that embodiments with such variations or modifications may also fall under the technical scope of the present invention.

When making a computer function as the terminal device according to the present invention, the content of the processes in the respective means and parts is described by a program. Such program may be stored on, for example, a hard disc device, and at the time of execution, the required program and data may be loaded onto a Random Access Memory (RAM). The respective process content is then achieved on the computer when a Central Processing Unit (CPU) thereof executes such program.

### Reference Signs List

1, 10 TERMINAL DEVICE
2, 11 TOUCH PANEL
3a, 3b, 100, 200, 201, 202 ELECTRONIC STAMP
12 CONTROL PART
101 MEMBER
102 ARRANGEMENT CONTROL PART
103 STAMP SURFACE
210 PRESSING-DOWN PART
211 CONCAVE PART
212 FIRST SLOPE
213 SECOND STAMP
215 SURFACE AT WITH WHICH THE STAMPS ARE CAUSED TO MAKE CONTACT OR TO BE PRESSED DOWN
220 TRANSMISSION PART
221 SECOND SLOPE
222 THIRD SLOPE
225 SURFACE PERPENDICULAR TO THE SURFACE AT WITH WHICH THE STAMPS ARE CAUSED TO MAKE CONTACT OR TO BE PRESSED DOWN
230 MOVING PART
230a SIDE SURFACE OF THE MOVING PATR
231 FIRST STAMP
232 HOLE
241 THIRD STAMP
241a SPRING FIXING PART
241b SPRING

## Claims

1. A terminal device comprising:
a multi-touch type touch panel that is capable of simultaneously detecting touches or pressing-downs at a plurality of positions; and
a control part that performs predetermined control on the condition that, subsequent to the detection of touches or pressing-downs at the plurality of positions having a predetermined relative positional relationship, touches or pressing-downs are detected at a plurality of positions having another predetermined relative positional relationship on the touch panel.

2. The terminal device according to claim 1, wherein a plurality of absolute positions on the touch panel, which are touched or pressed down in the predetermined relative positional relationship, and a plurality of absolute positions on the touch panel, which are touched or pressed down in the another predetermined relative positional relationship, share at least one common position.

3. An electronic stamp comprising a plurality of members arranged in a predetermined relative positional relationship, wherein a terminal device is caused to detect touches or pressing-downs at a plurality of positions having the predetermined relative positional relationship by a touch panel of the terminal device being touched or pressed down with the plurality of members, and wherein the electronic stamp is configured such that an arrangement of the plurality of members arranged in the predetermined relative positional relationship can be automatically or semi-automatically changed to an arrangement in another predetermined relative positional relationship.

4. The electronic stamp according to claim 3, further comprising an arrangement control part that detects the plurality of members arranged in the predetermined relative positional relationship making contact with the touch panel or being pressed down against the touch panel and that, subsequent to the detection, changes the arrangement of the plurality of members arranged in the predetermined relative positional relationship to the arrangement in the another predetermined relative positional relationship.

5. The electronic stamp according to claim 3, further comprising:
a pressing-down part that includes, in a concave part that is formed facing a surface with which the first stamp and the second stamp make contact or against which the first stamp and the second stamp are pressed down, a first slope and a second stamp made up of a plurality of members arranged in the another predetermined relative positional relationship;
a plurality of transmission parts, each including a second slope and a third slope that are inclined so as to broaden in opposite directions with respect to each other while sandwiching therebetween a surface that is perpendicular to the surface, with which the first stamp and the second stamp make contact or against which the first stamp and the second stamp are pressed down; and
a plate-like moving part that is formed with a first stamp on one surface thereof, the first stamp being made up of a plurality of members arranged in the predetermined relative positional relationship, and the plate-like moving part not preventing the lowering of the second stamp, wherein
the concave part of the pressing-down part surrounds the plurality of transmission parts such that the first slope and the second slope make contact with each other on a surface-to-surface basis,
the moving part is mounted on the third slopes of the plurality of transmission parts that surround the moving part such that a surface that is formed with the first stamp faces the surface with which the first stamp makes contact or against which the first stamp is pressed down,
in a state where the pressing-down part is not pressed down, the first stamp is exposed to be ready for making contact with or for being pressed down against the touch panel, and
when the pressing-down part is pressed down toward the surface with which the stamp makes contact or against which the stamp is pressed down, the second stamp lowers down and the plurality of transmission parts are pressed and moved by the first slope sliding along the second slope, thus, an area of a part surrounded by the third slopes of the plurality of transmission parts decreases, and thus, the moving part rises by sliding along the third slopes and the second stamp is exposed to be ready for making contact with or for being pressed down against the touch panel.

6. The electronic stamp according to claim 5, wherein the moving part does not prevent lowering of the second stamp by configuring the moving part by providing a plurality of holes corresponding to the arrangement of the plurality of members of the second stamp and by allowing the plurality of members to pass through the plurality of holes.

7. The electronic stamp according to claim 5 or 6, wherein the pressing-down part includes a third stamp made up of one or more members on a surface facing the surface with which the first stamp and the second stamp make contact or against which the first stamp and the second stamp are pressed down,
in a state where the pressing-down part is not pressed down, the first stamp and the third stamp are exposed to be ready for making contact with or for being pressed down against the touch panel,
when the pressing-down part is pressed down toward the surface with which the stamp makes contact or against which the stamp is pressed down, the second stamp and the third stamp are exposed to be ready for making contact with or for being pressed down against the touch panel.

8. The electronic stamp according to claim 5 or 6, wherein part or all of a surface of at least one of the transmission parts which faces the surface, with which the first stamp and the second stamp make contact or against which the first stamp and the second stamp are pressed down, is made as the third stamp,
in a state where the pressing-down part is not pressed down, the first stamp and the third stamp are exposed to be ready for making contact with or for being pressed against the touch panel, and
when the pressing-down part is pressed down toward the surface with which the stamp makes contact with or against which the stamp is pressed down, the second stamp and the third stamp are exposed to be ready for making contact with or for being pressed down against the touch panel.

9. A program making a computer function as the control part of the terminal device according to claim 1 or 2.
